# EUROPEAN PATENT APPLICATION

(11) **EP 4 759 459 A1**
(43) Date of publication of application: **17.06.2026**
(21) Application number: 24851371.5
(22) Date of filing: 31.05.2024
(51) Int. Cl.: B21D 51/26, B21D 43/00, B21D 43/18, B65G 47/91

(54) **BOTTOMED CYLINDRICAL BODY PROCESSING DEVICE**

(30) Priority: 09.08.2023 JP 2023130105
(71) Applicant: Toyo Seikan Co., Ltd., Tokyo 141-8640 (JP)
(72) Inventor: YUGE, Hideki, Yokohama-shi, Kanagawa 230-0001 (JP); ENDO, Tadashi, Yokohama-shi, Kanagawa 230-0001 (JP)
(74) Representative: dompatent
(86) International application number: PCT/JP2024/019987
(87) International publication number: WO 2025/032937

(57) **Abstract**

Provided is a bottomed tubular body processing device which is capable of performing necking on a bottomed tubular body a plurality of times without significant increase in an installation space and is commonly used for bottomed tubular bodies having different heights with a simple configuration and without a complicated setting action. The bottomed tubular body processing device (100) includes a multi-stage necking section (110) in which a plurality of necking units are sequentially disposed along a conveyance path, and a circulating conveyor (131) that refeeds a bottomed tubular body discharged from a downstream necking unit to an upstream necking unit. The circulating conveyor conveys the bottomed tubular body by retaining an opening end of the bottomed tubular body against a conveyance surface (132). A bottom turret (124) of a processing turret (120) constituting the necking unit supports a bottom portion of the bottomed tubular body and is configured to be movable in an axial direction by a position adjustment mechanism based on a height in a tube axial direction of the bottomed tubular body to be subjected to the necking.

## Description

### Technical Field

The present invention relates to a bottomed tubular body processing device that performs necking on an opening end of a bottomed tubular body a plurality of times while conveying the bottomed tubular body along a conveyance path.

### Background Art

In the related art, a can used as a beverage can or the like is manufactured by performing drawing, ironing, and the like on a metal plate material punched out into a circular shape to form a can barrel having a bottomed tubular shape, and further performing, on an opening end of the can barrel, predetermined necking, trimming, and, if necessary, a mouth portion forming such as thread portion forming and curled portion forming.

The drawing, which is called necking, is usually divided into a plurality of steps to be performed in a stepwise manner so that the metal material constituting the can barrel is not subjected to an excessive stress. Examples of devices that perform necking a plurality of times in a stepwise manner include a device in which a plurality of processing turrets are connected in series, and one necking step is performed at each processing turret while a can barrel is sequentially conveyed, thereby performing the necking including a plurality of steps in one cycle.

However, since such a device needs to be provided with the same number of processing turrets as the number of desired necking steps, there is a problem that the lengths and sizes of the device and equipment are significantly increased and more installation space is required in a case where a can barrel needing necking a large number of times is manufactured.

In order to solve such a problem, for example, Patent Document 1 discloses a device in which a plurality of processing turrets are disposed in series, a feed position where a can barrel is fed is provided on one end side, and a discharge position where the can barrel is discharged is provided on the other end side. The can barrel is conveyed from the feed position, sequentially subjected to a plurality of processing steps of a first cycle at each processing turret, and discharged from the discharge position. Then, the discharged can barrel, which is in a semi-finished state, is returned to the feed position by a circulating conveyor, conveyed to the plurality of processing turrets to be subjected again to the plurality of steps of a second cycle.

In a device using such a circulating conveyor, the number of processing turrets arranged side by side in a horizontal direction can be reduced, and the number of processing steps that can be performed per an installation space can be increased.

### Citation List

### Patent Literature

Patent Document 1: EP 2001617 B

### Summary of Invention

### Technical Problem

In contrast, in the device using the circulating conveyor described above, since the circulating conveyor has a structure in which a bottom portion of the can barrel is retained and conveyed because of the easiness in supporting and conveying, there is a problem that it is difficult to make a transfer from the processing turret to the circulating conveyor in a case where the device is diverted to the manufacture of beverage cans having a different height, that is, in a case of so-called type change.

Specifically, since each processing turret is designed to process the opening end of a can barrel, the can barrel is sequentially conveyed in a state in which the opening end is aligned to a reference trim surface so as to be reliably processed. In a case where the device is dedicated to a can barrel of a certain height, the circulating conveyor may be disposed at a position at which the conveying surface of the circulating conveyor is close and opposed to the bottom portion of the can barrel as an initial design. However, when the same device is diverted as-is for necking of a can barrel having a different height, for example, a can barrel having a low height, the can barrel which has been subjected to processing of a first cycle is far away from the circulating conveyor at a transfer position to the circulating conveyor, and thus, there is a problem that it is difficult to make a transfer to the circulating conveyor. In such a case, the circulating conveyor itself is moved to shift the position of the conveying surface, but this is not practical because large-scale setting is needed in view of the size of the circulating conveyor, and the setting action itself becomes complicated.

The present invention has been made to solve the above problems, and an object thereof is to provide a bottomed tubular body processing device which is capable of performing necking on a bottomed tubular body a plurality of times without significant increase in an installation space and is commonly used for bottomed tubular bodies having different heights with a simple configuration and without a complicated setting action.

### Solution to Problem

A bottomed tubular body processing device according to the present invention is a bottomed tubular body processing device that performs necking on an opening end of a bottomed tubular body a plurality of times while conveying the bottomed tubular body along a conveyance path. The bottomed tubular body processing device includes: a multi-stage necking section in which a plurality of necking units are sequentially disposed along the conveyance path; and a circulating conveyor that refeeds, to an upstream necking unit provided upstream in the multi-stage necking section, a bottomed tubular body discharged from a downstream necking unit provided downstream in the multi-stage necking section. The circulating conveyor has a conveying surface disposed to face the opening end of the bottomed tubular body, and is configured to convey the bottomed tubular body by retaining the opening end of the bottomed tubular body against the conveying surface. The necking units include a processing turret that performs necking on the bottomed tubular body. The processing turret includes a bottom turret provided with a plurality of pockets disposed in a circumferential direction and configured to hold the bottomed tubular body in the pockets and support a bottom portion of the bottomed tubular body, and a tool turret disposed on one side in an axial direction of the processing turret and including a processing tool that performs the necking on the bottomed tubular body. The bottom turret is configured to be movable in an axial direction by a position adjustment mechanism, based on a height in a tube axial direction of the bottomed tubular body to be subjected to the necking.

The bottomed tubular body processing device of the present invention may have a configuration in which the circulating conveyor conveys the bottomed tubular body while retaining the opening end of the bottomed tubular body against the conveying surface by means of suction, and a negative pressure for the retaining is in a range from -0.5 to -11 kPa.

The bottomed tubular body processing device of the present invention may have a configuration in which a transfer turret that moves, to a transfer position opposed to the circulating, the bottomed tubular body discharged from the downstream necking unit provided downstream in the multi-stage necking section is further provided, the transfer turret is provided with a plurality of pockets disposed in a circumferential direction, and when the pocket holding the bottomed tubular body in the transfer turret is at the transfer position to the circulating conveyor, a clearance between the bottomed tubular body and the conveying surface of the circulating conveyor is equal to or less than 15 mm.

The bottomed tubular body processing device of the present invention may have a configuration in which a conveying speed at the circulating conveyor is lower than the conveying speed at the processing turret of the necking unit.

The bottomed tubular body processing device of the present invention may have a configuration in which a deceleration turret that decelerates a conveying speed of the bottomed tubular body is further provided, and any of turrets that are provided between the downstream necking unit and the circulating conveyor to convey the bottomed tubular body discharged from the downstream necking unit to the circulating conveyor is set as the deceleration turret.

The bottomed tubular body processing device of the present invention may have a configuration in which the transfer turret is a deceleration turret that decelerates a conveying speed of the bottomed tubular body, and the conveying speed at the transfer turret is lower than the conveying speed at the processing turret of the necking unit and equal to or higher than the conveying speed at the circulating conveyor.

In the bottomed tubular body processing device of the present invention, the opening end of the bottomed tubular body which is conveyed while being retained against the conveying surface of the circulating conveyor is in a diameter-reduced state.

The bottomed tubular body processing device of the present invention may have a configuration in which the respective necking units of the multi-stage necking section are disposed in series along horizontal one direction, the circulating conveyor extends along the one direction above the multi-stage necking section, a chute is further provided, the chute feeding the bottomed tubular body by moving the bottomed tubular body downward from a rear end of the conveyance path of the circulating conveyor to the upstream necking unit, and the chute includes an air mechanism that supports movement of the bottomed tubular body.

### Advantageous Effects of Invention

According to the bottomed tubular body processing device of the present invention, since the circulating conveyor that refeeds the bottomed tubular body discharged from the downstream necking unit to the upstream necking unit is provided, the number of processing turrets required for a series of a plurality of times of the necking can be reduced, and thus, basically, it is possible to perform the necking on the bottomed tubular body a plurality of times without significant increase in the installation space. Moreover, since the conveying surface of the circulating conveyor is configured to convey the bottomed tubular body while retaining the opening end, that is, a trim side of the bottomed tubular body, even in a case of diversion (type change) for necking of a bottomed tubular body having a relatively different height, a separation distance between the opening end of the bottomed tubular body and the conveying surface of the circulating conveyor is not changed, and thus the type change of the circulating conveyor is not required. In a case of diversion (type change) for necking of a bottomed tubular body having a relatively different height, the bottom turret that supports the bottom portion of the bottomed tubular body is adjusted in advance by the position adjustment mechanism so as to be disposed at an appropriate axial position based on the height in the tube axial direction of the bottomed tubular body to be subjected to the necking, whereby the bottomed tubular body can be conveyed with a commonalized axial position of the opening end of the bottomed tubular body. Therefore, the bottomed tubular body processing device of the present invention can be used in common for bottomed tubular bodies having different heights without a complicated setting action, and thus high convenience can be obtained.

Further, since the circulating conveyor is configured to convey the bottomed tubular body while retaining the opening end of the bottomed tubular body, the separation distance between the opening end of the bottomed tubular body and the conveying surface of the circulating conveyor can be set to a constant close distance regardless of the height of the bottomed tubular body in the tube axial direction, and thus the transfer of the bottomed tubular body to the circulating conveyor is facilitated regardless of the height of the bottomed tubular body in the tube axial direction, and high stability is obtained in the transfer and subsequent conveyance of the bottomed tubular body. In a case of conveying the bottomed tubular body while retaining the bottom portion of the bottomed tubular body, a separate transfer means is required at the time of transfer to the circulating conveyor, and there is a possibility that a dent may be formed on the bottomed tubular body or a jam may occur depending on the type of the transfer means.

According to the bottomed tubular body processing device of the present invention, since the negative pressure for retaining by the circulating conveyor is within the specific range, the retaining force against the conveying surface can be sufficiently obtained without deformation such as a dent or crush of the bottomed tubular body, and displacement during conveyance can be prevented, so that high conveyance stability can be obtained.

According to the bottomed tubular body processing device of the present invention, since the clearance between the bottomed tubular body and the conveying surface of the circulating conveyor when the pocket of the transfer turret holding the bottomed tubular body is located at the transfer position to the circulating conveyor is within the predetermined range, the transfer of the bottomed tubular body to the circulating conveyor can be reliably executed only by the retaining force of the circulating conveyor, and an impact on the opening end of the bottomed tubular body due to the transfer by the retaining force can be reduced, so that the occurrence of damages such as deformation to the opening end of the bottomed tubular body can be prevented.

According to the bottomed tubular body processing device of the present invention, since the conveying speed at the circulating conveyor is lower than the conveying speed at the processing turret of the necking unit, a speed at which the bottomed tubular body is fed into the chute for refeeding the bottomed tubular body to the multi-stage necking section of the second cycle can be reduced, and as a result, occurrence of deformation such as a dent on the bottomed tubular body when the bottomed tubular body is fed into the chute can be prevented.

According to the bottomed tubular body processing device of the present invention, any one of the turrets which are provided between the downstream necking unit and the circulating conveyor and convey, to the circulating conveyor, the bottomed tubular body discharged from the downstream necking unit is the deceleration turret. Thus, for example, when the transfer turret is the deceleration turret and the conveying speed at the transfer turret is lower than the conveying speed at the processing turret of the necking unit and is equal to or higher than the conveying speed at the circulating conveyor, the bottomed tubular body can be reliably transferred from the processing turret having a higher speed to the circulating conveyor having a lower speed without causing any adverse effect. Further, since the circulating conveyor has a lower speed, a speed at which the bottomed tubular body is fed into the chute for refeeding the bottomed tubular body to the multi-stage necking section of the second cycle can be reduced, and as a result, occurrence of deformation such as a dent on the bottomed tubular body when the bottomed tubular body is fed into the chute can be prevented.

According to the bottomed tubular body processing device of the present invention, the bottomed tubular body when conveyed while being retained to the conveying surface of the circulating conveyor is in a diameter-reduced state in which the diameter of the opening end has been reduced by being sequentially subjected to the processing in the first cycle in each processing turret of the multi-stage necking section. Therefore, since the rigidity of the bottomed tubular body is increased by the diameter reduction, the bottomed tubular body can be reliably supported by the retaining of the circulating conveyor, and occurrence of deformation such as a dent or crush while being conveyed by the circulating conveyor can be prevented.

According to the bottomed tubular body processing device of the present invention, since the chute that feeds the bottomed tubular body by moving the bottomed tubular body downward from a rear end of the conveyance path of the circulating conveyor to the upstream necking unit is provided with the air mechanism for assisting the movement of the bottomed tubular body, an unintended decrease in the conveying speed of the bottomed tubular body due to the bottomed tubular body being caught at the chute or the like can be suppressed, and the conveying speed of the bottomed tubular body can be stabilized.

### Brief Description of Drawings

FIG. 1 is an explanatory diagram illustrating a configuration of a bottomed tubular body processing device according to an embodiment of the present invention from a front side.
FIG. 2 is an explanatory diagram illustrating the bottomed tubular body processing device of FIG. 1 from a back side.
FIG. 3 is an explanatory diagram illustrating an example of a configuration of a processing turret in the bottomed tubular body processing device of FIG. 1, where (a) illustrates a state at the time of processing a high-height can, and (b) illustrates a state at the time of processing a low-height can.
FIG. 4 is an explanatory diagram illustrating an example of configurations of a transfer turret and a circulating conveyor in the bottomed tubular body processing device of FIG. 1.
FIG. 5 is a cross-sectional view taken along line A-A of FIG. 4, illustrating a state at the time of transferring a high-height can.
FIG. 6 is a cross-sectional view taken along line A-A of FIG. 4, illustrating a state at the time of transferring a low-height can.

### Description of Embodiments

The present invention will be described in detail below.

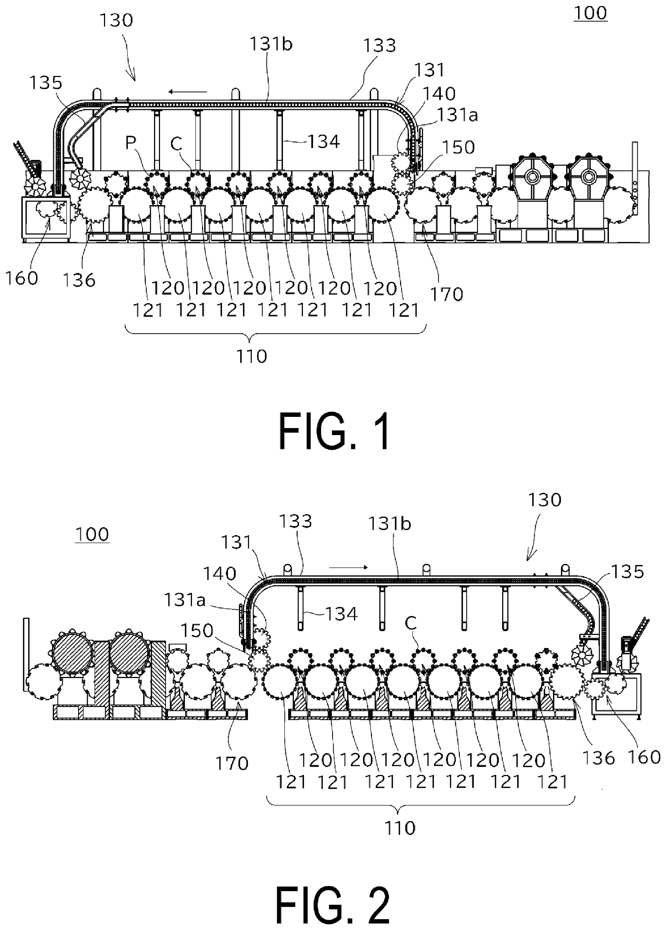

FIG. 1 is an explanatory diagram illustrating a configuration of a bottomed tubular body processing device according to an embodiment of the present invention as viewed from a front side (a bottom portion B side of a can barrel C) on which an operator stands, and FIG. 2 is an explanatory diagram illustrating the bottomed tubular body processing device of FIG. 1 as viewed from a back side (an opening end T side of the can barrel C).

A bottomed tubular body processing device 100 according to an embodiment of the present invention performs necking on an opening end T of a can barrel C a plurality of times while circulating and conveying the can barrel C, which is a bottomed tubular body, along a conveyance path. As illustrated in FIGS. 1 and 2, the bottomed tubular body processing device 100 includes: a multi-stage necking section 110 in which a plurality of (six in FIG. 1) necking units are sequentially disposed along the conveyance path; a refeeding mechanism 130 including a circulating conveyor 131 that refeeds the can barrels C discharged from a downstream necking unit provided downstream in a conveyance direction in the multi-stage necking section 110 to an upstream necking unit provided upstream in the conveyance direction in the multi-stage necking section 110; a transfer turret 140 for transferring the can barrels C discharged from the downstream necking unit to the circulating conveyor 131; and a sorting turret 150 that is disposed between the downstream necking unit and the transfer turret 140 and sorts the can barrels C into the can barrels C which have been subjected to the necking of a first cycle and are to be conveyed to the circulating conveyor 131 and the can barrels C which have been subjected to the necking of a second cycle and are to be conveyed to a discharge mechanism 170.

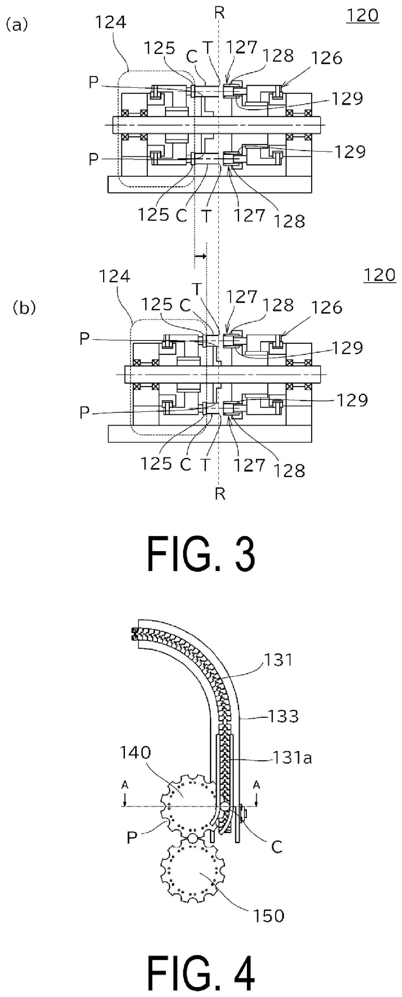

Each of the necking units includes a processing turret 120 that performs necking on the can barrels C. As illustrated in FIG. 3, the processing turret 120 includes: a rotatable bottom turret 124 including a bottom tool 125 which is provided with a plurality of pockets P for individually accommodating and conveying the can barrels C at substantially equal intervals in a circumferential direction at an outer peripheral surface and which holds the can barrels C in the pockets and supports bottom portions B of the can barrels C from the bottom portion side in a tube axial direction; and a rotatable tool turret 126 (see FIG. 3) which is disposed on one side (a right side in FIG. 3) in an axial direction of the bottom turret 124 and includes a processing tool 127 for performing the necking on the can barrels C accommodated in the pockets P.

In the multi-stage necking section 110, conveying turrets 121 that convey the can barrels C are alternately disposed between the two adjacent processing turrets 120 and before and after these processing turrets. The can barrel C accommodated in each pocket P of the processing turret 120 is subjected to one stage of the necking by the processing tool 127 of the tool turret 126 during a time until the can barrel C is transferred to the conveying turret 121 located downstream in the conveyance direction.

The pockets P of the processing turret 120 are alternately set to be a first pocket held in the first cycle and a second pocket held in the second cycle, and the can barrel C held in the first pocket is subjected to the necking of the n-th stage of the first cycle, and the can barrel C held in the second pocket is subjected to the necking of the n-th stage of the second cycle (that is, the (n + x)-th stage in total). The symbol n represents the order of arrangement of the necking unit counted from the upstream side, and the symbol x represents the total number of the necking units.

Note that, in the bottomed tubular body processing device according to FIG. 3, the pockets P are provided at the bottom turret 124 and move in the axial direction together with the bottom turret 124, but the bottomed tubular body processing device is not limited to this configuration, and there may be a configuration in which the pockets P are provided at a turret separate from the bottom turret 124 and the turret provided with the pockets P is not required to move in the axial direction even in a case of diversion (type change) to necking of can barrels C having a relatively different height.

In the processing turret 120, each processing tool 127 of the tool turret 126 is disposed so as to be opposed to each pocket P of the corresponding processing turret 120, and the tool turret 126 rotationally moves in synchronization with the rotation of the bottom turret 124. The processing tool 127 includes, for example, an outer tool 128 having an annular shape that is fitted to an outer peripheral portion of the opening end T of the can barrel C to reduce the diameter of the opening end T, and an inner tool 129 that is inserted into the opening end T of the can barrel C and has a diameter smaller than the outer diameter of the opening end T of the can barrel C by about 1 to 2 mm. In the processing turret 120, the bottom tool 125 corresponding to each pocket P and the inner tool 129 of the processing tool 127 of the tool turret 126 are configured to be capable of reciprocating in the axial direction of the processing turret 120 by a drive mechanism (not illustrated), and the bottom tool 125 and the inner tool 129 are driven in an approaching direction. When the bottom tool 125 and the inner tool 129 are further driven in the direction to the outer tool 128, the opening end T of the can barrel C is inserted between the inner tool 129 and the outer tool 128, whereby the opening end T of the can barrel C is subjected to one stage of the necking.

Each conveying turret 121 includes a rotatable turret that includes, at an outer peripheral surface thereof, a plurality of pockets for holding the can barrels C and receives the can barrels C having been processed by the necking unit disposed adjacently on the upstream side and feeds the can barrels C to the pockets P of the same phase (first or second pockets) of the processing turret 120 disposed adjacently on the downstream side.

In the bottomed tubular body processing device 100 according to the present embodiment, the processing turrets 120 of the respective necking units of the multi-stage necking section 110 are arranged in series side by side in horizontal one direction (the left-right direction in FIG. 1) in a state in which the central axes thereof extend in a horizontal direction (the direction perpendicular to the paper surface in FIG. 1), and the respective conveying turrets 121 are also arranged in series side by side in the horizontal one direction in a state in which the central axes thereof extend in the same axial direction as the processing turrets 120. With this arrangement, the processing turrets 120 are prevented from being arranged to overlap each other in a vertical direction (the up-down direction in FIG. 1), and thus excellent maintainability is obtained.

In the bottomed tubular body processing device 100 of the present embodiment, on the conveyance path of the can barrel C, the can barrel C is conveyed in a state in which the position of the opening end T of the can barrel C in the tube axial direction is uniform, that is, the opening end T is along a reference trim surface R perpendicular to the axial direction of the respective processing turrets 120, from when the can barrel C is fed to the multi-stage necking section 110 until when the can barrel C is transferred to the circulating conveyor 131, specifically, at the conveying turrets 121, the processing turrets 120, the sorting turret 150, and the transfer turret 140. Further, the can barrel C is conveyed on the conveyance path in a state in which the tube axial direction coincides with the axial direction of the processing turrets 120, and in a state in which the bottom portion B of the can barrel C is directed toward the operator side on the operator side of the reference trim surface R.

The multi-stage necking section 110 is provided with a position adjustment mechanism capable of moving the bottom turret 124 in the axial direction in advance based on the height in the tube axial direction of the can barrel C to be subjected to the necking. The position adjustment mechanism moves the bottom turret 124 to a position at which the bottom tool 125 can hold the bottom portion B of the can barrel C when the opening end T of the can barrel C is positioned to the reference trim surface R. Specifically, in contrast to a case where the can barrel C is a can barrel C having a high height in the tube axial direction (a high-height can) as illustrated in FIG. 3(a), when the can barrel C is a can barrel C having a low height (a low-height can) as illustrated in FIG. 3(b), adjustment may be performed to move the can barrel C toward the tool turret 126 side (the right side in FIG. 3) in the axial direction (see the arrow in FIG. 3).

The position adjustment mechanism may move the plurality of bottom turrets 124 individually or simultaneously. Further, a specific configuration for moving the bottom turret 124 in the axial direction in the position adjustment mechanism is not particularly limited.

In the bottomed tubular body processing device 100 according to the present embodiment, the conveying turret 121 interposed between the processing turrets 120 is configured to hold the body portion of the can barrel C in each pocket by holding the body portion in a radial direction by suction or a magnetic force, and thus does not need to move in the axial direction based on the height of the can barrel C in the tube axial direction, but may move in accordance with the position of the center of gravity of the can barrel C.

The sorting turret 150 includes a plurality of pockets P disposed in the circumferential direction, and can hold the can barrels C by holding the can barrels C into the respective pockets P by suction or a magnetic force, and can convey the can barrels C to the transfer turret 140 or the discharge mechanism 170 by rotation.

In the sorting turret 150, the can barrels C can be easily sorted by controlling ON/OFF of the retaining of each of the plurality of pockets P disposed in the circumferential direction, that is, by turning off the retaining when the can barrel C to be conveyed to the circulating conveyor 131 is conveyed to a transfer position to the transfer turret 140, and turning off the retaining when the can barrel C to be conveyed to the discharge mechanism 170 is conveyed to a transfer position to the discharge mechanism 170.

As illustrated in FIG. 4, the transfer turret 140 includes a plurality of pockets P disposed in the circumferential direction, and the pockets P are configured to pass through, by rotation, a receiving position at which the can barrel C discharged from the downstream necking unit is received via the conveying turret 121 disposed on the most downstream side and the sorting turret 150, and a transfer position related to transfer that is opposed to the circulating conveyor 131.

The transfer turret 140 is a deceleration turret that decelerates the conveying speed of the can barrel C. The conveying speed of the circulating conveyor 131 is set to be relatively lower than the conveying speed of each processing turret 120, and the conveying speed of the transfer turret 140 is preferably lower than the conveying speed of the processing turret 120 and the conveying speed of the sorting turret 150 and equal to or higher than the conveying speed of the circulating conveyor 131. Since the conveying speed of the circulating conveyor 131 is relatively lower than the conveying speed of the processing turret 120, a conveying pitch of the can barrels C can be narrowed.

As an example of a conveying speed ratio of the respective parts, a ratio among a circumferential speed of the sorting turret 150, a circumferential speed of the transfer turret 140, and the conveying speed of the circulating conveyor 131 can be set to 10:6:4.

The specific configuration of the transfer turret 140 is not limited to the above-described configuration as long as deceleration and transfer can be implemented.

Further, the method of decelerating the conveying speed of the can barrel C is not limited to the configuration in which the transfer turret 140 is a deceleration turret, and may be any method as long as the conveying speed of the circulating conveyor 131 can be made lower than the conveying speed of the processing turret 120. Thus, a configuration in which one or more of the turrets provided until the can barrel C discharged from the processing turret 120 is conveyed to the circulating conveyor 131 are deceleration turrets, or a configuration in which the conveying speeds of each processing turret 120 and the transfer turret 140 are the same and only the circulating conveyor 120 has a conveying speed relatively lower than the conveying speeds of each processing turret 120 and the transfer turret 140 may be employed.

The respective turrets constituting a feeding mechanism 160, the multi-stage necking section 110, the sorting turret 150, and the discharge mechanism 170 are driven to rotate by appropriate drive sources directly or mechanically via transmission mechanisms, and the rotational speeds of these turrets, that is, the moving speeds of the pockets and interlocking timings of the pockets are designed to be adjustable so that the can barrels C are smoothly transferred between the turrets.

The circulating conveyor 131 includes a parallel path 131b extending in one direction (the left-right direction in FIG. 1) that is the same as the installation direction of the multi-stage necking section 110 in a space above the multi-stage necking section 110, and is disposed such that the supported can barrel C moves in a direction (the leftward direction in FIG. 1) opposite to the direction (the rightward direction in FIG. 1) in which the can barrel C is conveyed in the multi-stage necking section 110. The circulating conveyor 131 extends with a corner so as to include an ascending path 131a that moves the can barrel C transferred from the transfer turret 140 upward and the parallel path 131b that moves the can barrel C in a circulating direction. The parallel path 131b and the ascending path 131a are not limited to the configuration as illustrated in FIG. 1 in which they extend horizontally and vertically in a straight line, respectively, but may be configured to be disposed at a predetermined angle or configured to extend in a curved line. Further, the parallel path 131b and the ascending path 131a may be configured to extend in a curved manner without being distinguished from each other. The circulating conveyor 131 has a vertical structure for moving the can barrel C for refeeding in the space above the multi-stage necking section 110, and thus the plane space can be saved.

In FIGS. 1 and 2, a reference sign 133 denotes a support member that supports the circulating conveyor 131 to maintain the conveyance path, and a reference sign 134 denotes a bridge pier that supports the support member 133 in the space above the multi-stage necking section 110.

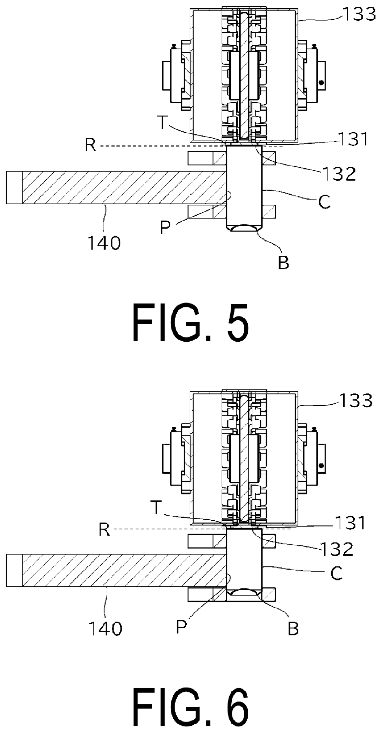

In the bottomed tubular body processing device 100 according to the present embodiment, as illustrated in FIGS. 5 and 6, the circulating conveyor 131 is disposed on a side opposite to the operator with respect to the reference trim surface R in a state in which the conveying surface 132 is opposed to the side opposite to the operator of the reference trim surface R at a close distance.

Specifically, the circulating conveyor 131 is disposed such that the conveying surface 132 coincides with a plane perpendicular to the tube axis of the can barrel C and is opposed to the opening end T of the can barrel C conveyed to the transfer position by the transfer turret 140 in the tube axial direction. The conveying surface 132 is not limited to being disposed so as to coincide with a plane completely perpendicular to the tube axis of the can barrel C, and may be disposed so as to form a slight angle with the plane perpendicular to the tube axis of the can barrel C as long as the conveying surface is opposed to the opening end T of the can barrel C at the transfer position and predetermined transfer is possible.

A separation clearance between the conveying surface 132 of the circulating conveyor 131 and the opening end T of the can barrel C, that is, a separation distance (clearance) between the opening end T of the can barrel C and the conveying surface 132 of the circulating conveyor 131 when the pocket P holding the can barrel C in the transfer turret 140 is at the transfer position to the circulating conveyor 131 is preferably 15 mm or less, more preferably 11 mm or less, and particularly preferably 3 mm or less. When the clearance is larger than 15 mm, the can barrel C cannot be reliably retained only by the suction force of the circulating conveyor 131, and a failure in transfer to the circulating conveyor 131 may occur. Further, the clearance between the opening end T of the can barrel C and the conveying surface 132 of the circulating conveyor 131 is preferably 1 mm or more. With the clearance of 1 mm or more, even when the can barrel C is slightly displaced, there is no possibility of collision or the like between the can barrel C and the circulating conveyor 131.

The clearance between the conveying surface 132 of the circulating conveyor 131 and the opening end T of the can barrel C does not need to be changed between a case where the can barrel C is a high-height can (FIG. 5) and a case where the can barrel C is a low-height can (FIG. 6), and is only required to be within the above-described range.

The circulating conveyor 131 is a so-called vacuum conveyor that conveys the can barrel C by retaining the opening end T of the can barrel C against the conveying surface 132 by suction. When the can barrel C is made of steel, a magnetic conveyor that adsorbs the can barrel C by a magnetic force may be employed.

The negative pressure for retaining by the suction of the circulating conveyor 131 may be of any magnitude as long as the can barrel C can be retained without deformation and, specifically, is preferably in a range of -0.5 to -11 kPa. When the negative pressure for retaining is smaller than -0.5 kPa, the retaining force against the conveying surface is not sufficiently obtained, and there is a possibility that the can barrel C is displaced during conveyance. On the other hand, when the negative pressure for retaining is larger than -11 kPa, deformation such as a dent or crush of the can barrel C may occur. The negative pressure being larger or smaller than - X kPa means that an absolute value X is a large value or a small value.

The circulating conveyor 131 is formed of, for example, a plastic material, and a frictional cushion material such as rubber is preferably attached to the conveying surface 132. When the frictional cushion material is attached to the conveying surface 132, an impact on the opening end T when the opening end T of the can barrel C is supported by retaining against the conveying surface 132 is mitigated, and thus a the can barrel C is less likely to suffer from a damage such as deformation. Further, since a friction coefficient is increased, the displacement of the can barrel C during conveyance can be prevented.

The refeeding mechanism 130 including the circulating conveyor 131 is provided with a chute 135 that causes the can barrel C to slide down from the rear end of the conveyance path of the circulating conveyor 131 to be fed to the upstream necking unit.

The chute 135 has an internal space suitable for the can barrel C having a high height in the tube axial direction (a high-height can), allowing the high-height can as well as the can barrel C having a lower height than the high-height can (a low-height can) to move downward in a state in which the opening end T is along the reference trim surface R. The chute 135 is provided with an air mechanism (not illustrated) that assists the downward movement of the can barrel C so as to prevent the flow of the can barrel C from being blocked.

In the bottomed tubular body processing device 100 described above, first, adjustment of moving the bottom turret 124 to an appropriate position is performed in advance by the position adjustment mechanism. Specifically, the bottom turret 124 is moved such that the opening end T of the can barrel C is positioned to the reference trim surface R when the bottom tool 125 holds the bottom portion B of the can barrel C based on the height in the tube axial direction of the can barrel C to be subjected to necking. In this state, the necking is performed a plurality of times as described below. First, an unprocessed can barrel C fed from the feeding mechanism 160 to the multi-stage necking section 110 is transferred to the first pocket P of the processing turret 120 related to the upstream necking unit via the conveying turret 121 on the most upstream side, and is subjected to one stage of the necking by the processing tool 127 of the corresponding tool turret 126 during a time until the can barrel C is transferred to the conveying turret 121 adjacent on the downstream side in the conveyance direction. Similarly, a plurality of times (six times in the present embodiment) of the necking of the first cycle are performed in a stepwise manner in the respective first pockets P of the processing turrets 120 of the necking units sequentially adjacent on the downstream side the conveying turrets 121, leading to a semi-finished state in which the diameter of the opening end T is reduced. When the can barrel C with the opening end T having a reduced diameter is moved to the discharge position of the downstream necking unit on the most downstream side, the can barrel C is transferred to the sorting turret 150 via the conveying turret 121, and is transferred to the pocket P of the transfer turret 140 by the sorting turret 150 turning off the retaining at the transfer position to the transfer turret 140. When the pocket P holding the can barrel C is moved to the transfer position at a decelerated conveying speed along with the rotation of the transfer turret 140, the suction force of the circulating conveyor 131 acts in a state in which the retaining of the transfer turret 140 is turned off, so that the opening end T of the can barrel C is retained against the conveying surface 132. As a result, the can barrel C with the opening end T having the reduced diameter is transferred from the transfer turret 140 to the circulating conveyor 131.

The can barrel C retained by the circulating conveyor 131 passes through the ascending path 131a and the parallel path 131b along the conveyance path, and is thrown into the chute 135 at the rear end of the parallel path 131b. The can barrel C thrown into the chute 135 is moved downward such that the opening end T is along the reference trim surface R in the internal space of the chute 135, and is fed into the second pocket P of the processing turret 120 of the upstream necking unit via a refeeding turret group 136 and the conveying turret 121 on the most upstream side.

The can barrel C fed into the second pocket P of the processing turret 120 of the upstream necking unit is subjected to the first stage (seventh stage in total) of the necking of the second cycle during a time until the can barrel C is transferred to the conveying turret 121 adjacent on the downstream side in the conveyance direction. Similarly, a plurality of times (six times in the present embodiment) of the necking of the second cycle are performed in a stepwise manner in the respective second pockets P of the necking units sequentially adjacent on the downstream side via the conveying turrets 121. When the can barrel C is moved to the discharge position of the downstream necking unit on the most downstream side, the can barrel C is transferred to the discharge mechanism 170 via the conveying turret 121 on the most downstream side and the sorting turret 150, subjected to other processing as needed, conveyed outside the bottomed tubular body processing device 100 to be subjected to next processing.

The bottomed tubular body processing device 100 according to the embodiment of the present invention has been described above. However, the bottomed tubular body processing device of the present invention is not limited to the above-described embodiment.

For example, the above-described embodiment has described that the multi-stage necking section includes six necking units, and the necking is performed twelve times by passing through all the necking units in both the first and second cycles. However, the above-described configuration is not a limitation, as long as a conveyance start point and a conveyance end point of the circulating conveyor are set on the downstream side and the upstream side of the multi-stage necking section, respectively. For example, a configuration of passing through up to the fifth processing units in the first cycle, refeeding to the first processing unit by the circulating conveyor, and passing through all the six processing units in the second cycle, or a configuration of starting from the first processing unit and passing through up to the sixth processing unit in the first cycle, refeeding to the second processing unit by the circulating conveyor, and passing through five processing units in the second cycle, or another configuration may be employed.

Further, for example, in the above-described embodiment, the necking is performed at all the necking units, but another processing may be performed instead of the necking. Examples of the other processing include flanging of forming a flange for seaming a can lid, trimming of cutting off an unnecessary portion such as an edge of the opening end, threading of forming a threaded portion for seaming a cap, and curling of rounding the opening end. Further, a configuration of conveying while only passing through the processing turret 120 without performing processing may be employed.

Furthermore, for example, although the number of cycles has been described as 2, the device may be configured on the assumption that the number of cycles is 3 or more.

A part or all of the embodiment described above can be described as, but not limited to, the supplementary notes below.

### Supplementary Note 1

A bottomed tubular body processing device that performs necking on an opening end of a bottomed tubular body a plurality of times while conveying the bottomed tubular body along a conveyance path, the bottomed tubular body processing device including:
a multi-stage necking section in which a plurality of necking units are sequentially disposed along the conveyance path; and
a circulating conveyor that refeeds, to an upstream necking unit provided upstream in the multi-stage necking section, the bottomed tubular body discharged from a downstream necking unit provided downstream in the multi-stage necking section,
the circulating conveyor having a conveying surface which is disposed to face the opening end of the bottomed tubular body, and being configured to convey the bottomed tubular body by retaining the opening end of the bottomed tubular body against the conveying surface,
the necking units each including a processing turret that performs necking on the bottomed tubular body,
the processing turret including:
   a bottom turret provided with a plurality of pockets disposed in a circumferential direction and configured to hold the bottomed tubular body in the pockets and support a bottom portion of the bottomed tubular body; and
   a tool turret disposed on one side in an axial direction of the processing turret and including a processing tool that performs the necking on the bottomed tubular body,
   the bottom turret being configured to be movable in an axial direction by a position adjustment mechanism, based on a height in a tube axial direction of the bottomed tubular body to be subjected to the necking.

### Supplementary Note 2

The bottomed tubular body processing device according to Supplementary Note 1, wherein
the circulating conveyor is configured to convey the bottomed tubular body while retaining, by means of suction, the opening end of the bottomed tubular body against the conveying surface, and
a negative pressure for the retaining is in a range from -0.5 to -11 kPa.

### Supplementary Note 3

The bottomed tubular body processing device according to Supplementary Note 1 or 2, wherein a conveying speed at the circulating conveyor is lower than the conveying speed at the processing turret of the necking units.

### Supplementary Note 4

The bottomed tubular body processing device according to any one of Supplementary Notes 1 to 3, further including a deceleration turret that decelerates a conveying speed of the bottomed tubular body,
wherein any of turrets that are provided between the downstream necking unit and the circulating conveyor to convey the bottomed tubular body discharged from the downstream necking unit to the circulating conveyor is set as the deceleration turret.

### Supplementary Note 5

The bottomed tubular body processing device according to any one of Supplementary Notes 1 to 4, further including a transfer turret that moves, to a transfer position opposed to the circulating conveyor, the bottomed tubular body discharged from the downstream necking unit provided downstream in the multi-stage necking section,
wherein
the transfer turret is provided with a plurality of pockets disposed in a circumferential direction, and
when the pocket holding the bottomed tubular body in the transfer turret is at the transfer position to the circulating conveyor, a clearance between the bottomed tubular body and the conveying surface of the circulating conveyor is equal to or less than 15 mm.

### Supplementary Note 6

The bottomed tubular body processing device according to Supplementary Note 5, wherein
the transfer turret is a deceleration turret that decelerates a conveying speed of the bottomed tubular body, and
the conveying speed at the transfer turret is lower than the conveying speed at the processing turret of the necking units and equal to or higher than the conveying speed at the circulating conveyor.

### Supplementary Note 7

The bottomed tubular body processing device according to any one of Supplementary Notes 1 to 6, wherein the opening end of the bottomed tubular body conveyed while being retained against the conveying surface of the circulating conveyor is in a diameter-reduced state.

### Supplementary Note 8

The bottomed tubular body processing device according to any one of Supplementary Notes 1 to 7, wherein
the respective necking units of the multi-stage necking section are disposed in series along horizontal one direction,
the circulating conveyor extends along the one direction above the multi-stage necking section,
a chute is further provided, the chute feeding the bottomed tubular body by moving the bottomed tubular body downward from a rear end of the conveyance path of the circulating conveyor to the upstream necking unit, and
the chute includes an air mechanism that supports movement of the bottomed tubular body.

### Reference Signs List

100 Bottomed tubular body processing device
110 Multi-stage necking section
120 Processing turret
121 Conveying turret
124 Bottom turret
125 Bottom tool
126 Tool turret
127 Processing tool
128 Outer tool
129 Inner tool
130 Refeeding mechanism
131 Circulating conveyor
131a Ascending path
131b Parallel path
132 Conveying surface
133 Support member
134 Bridge pier
135 Chute
136 Refeeding turret group
140 Transfer turret
150 Sorting turret
160 Feeding mechanism
170 Discharge mechanism
B Bottom portion
C Can barrel
P Pocket
T Opening end

## Claims

1. A bottomed tubular body processing device that performs necking on an opening end of a bottomed tubular body a plurality of times while conveying the bottomed tubular body along a conveyance path, the bottomed tubular body processing device comprising:
a multi-stage necking section in which a plurality of necking units are sequentially disposed along the conveyance path; and
a circulating conveyor configured to refeed, to an upstream necking unit provided upstream in the multi-stage necking section, the bottomed tubular body discharged from a downstream necking unit provided downstream in the multi-stage necking section,
the circulating conveyor having a conveying surface which is disposed to face the opening end of the bottomed tubular body, and being configured to convey the bottomed tubular body by retaining the opening end of the bottomed tubular body against the conveying surface,
the necking units each including a processing turret that performs the necking on the bottomed tubular body,
the processing turret including:
a bottom turret provided with a plurality of pockets disposed in a circumferential direction and configured to hold the bottomed tubular body in the pockets and support a bottom portion of the bottomed tubular body; and
a tool turret disposed on one side in an axial direction of the processing turret and including a processing tool that performs the necking on the bottomed tubular body,
the bottom turret being configured to be movable in an axial direction by a position adjustment mechanism, based on a height in a tube axial direction of the bottomed tubular body to be subjected to the necking.

2. The bottomed tubular body processing device according to claim 1, wherein
the circulating conveyor is configured to convey the bottomed tubular body while retaining, by means of suction, the opening end of the bottomed tubular body against the conveying surface, and
a negative pressure for the retaining is in a range from -0.5 to -11 kPa.

3. The bottomed tubular body processing device according to claim 1, further comprising a transfer turret configured to move, to a transfer position opposed to the circulating conveyor, the bottomed tubular body discharged from the downstream necking unit provided downstream in the multi-stage necking section,
wherein
the transfer turret is provided with a plurality of pockets disposed in a circumferential direction, and
when the pocket holding the bottomed tubular body in the transfer turret is at the transfer position to the circulating conveyor, a clearance between the bottomed tubular body and the conveying surface of the circulating conveyor is equal to or less than 15 mm.

4. The bottomed tubular body processing device according to claim 1, wherein a conveying speed at the circulating conveyor is lower than the conveying speed at the processing turret of the necking unit.

5. The bottomed tubular body processing device according to claim 1, further comprising a deceleration turret configured to decelerate a conveying speed of the bottomed tubular body,
wherein any of turrets that are provided between the downstream necking unit and the circulating conveyor to convey the bottomed tubular body discharged from the downstream necking unit to the circulating conveyor is set as the deceleration turret.

6. The bottomed tubular body processing device according to claim 3, wherein
the transfer turret is a deceleration turret that decelerates a conveying speed of the bottomed tubular body, and
the conveying speed at the transfer turret is lower than the conveying speed at the processing turret of the necking unit and equal to or higher than the conveying speed at the circulating conveyor.

7. The bottomed tubular body processing device according to claim 1, wherein the opening end of the bottomed tubular body conveyed while being retained against the conveying surface of the circulating conveyor is in a diameter-reduced state.

8. The bottomed tubular body processing device according to claim 1, wherein
the respective necking units of the multi-stage necking section are disposed in series along horizontal one direction,
the circulating conveyor extends along the one direction above the multi-stage necking section,
a chute is further provided, the chute feeding the bottomed tubular body by moving the bottomed tubular body downward from a rear end of the conveyance path of the circulating conveyor to the upstream necking unit, and
the chute includes an air mechanism that supports movement of the bottomed tubular body.
